# DEMANDE DE BREVET EUROPEEN

(11) **EP 1 209 635 A1**
(43) Date de publication de la demande: **29.05.2002**
(21) Numéro de dépôt: 00125778.1
(22) Date de dépôt: 24.11.2000
(51) Int. Cl.: G07F 7/08, G07F 7/10, G07F 19/00

(54) **Télécommande securisée**

(71) Demandeur: eSecurium SA, 1227 Carouge (CH)
(72) Inventeur: Martin-Alcauza, Jorge, 92-380 Garches (FR)
(74) Mandataire: Wenger, Joel-Théophile

(57) **Abrégé**

Le but de la présente invention est de pouvoir garantir la sécurité des données personnelles depuis un serveur distant jusqu'à l'utilisateur final effectuant ses achats par exemple.

Ce but est atteint pour un système comprenant une télécommande et une unité multimédia disposant de moyens pour être connectée à un réseau de télécommunication, cette unité multimédia comprenant une unité centrale, une mémoire non volatile et une entrée de signaux de la télécommande, caractérisé en ce que la télécommande comprend des moyens pour encrypter les données à transmettre vers l'unité multimédia, cette dernière comprenant des moyens pour décrypter les donnés reçues.

## Description

La présente invention concerne une télécommande pour une unité multimédia de télévision à péage, en particulier pour des applications financières.

La fonction unique du poste de télévision fait déjà partie du passé et les fournisseurs de services ont bien compris l'intérêt que représente cette fenêtre sur le monde pour proposer d'autres services que la simple consommation de chaînes publiques.

Le premier service à avoir été proposé aux utilisateurs est la télévision à péage. Cette application oblige l'utilisation d'une unité spécialisée pour le décryptage des flux encryptés de télévision. Des premiers décodeurs analogiques, l'évolution a été rapide et aujourd'hui, les unité multimédia d'aujourd'hui n'ont rien à envier aux ordinateurs personnels.

Les concepteurs de ces unités multimédia ont rapidement compris ce que représente un tel appareil au domicile de milliers, voire millions de clients, acheteurs potentiels. L'arrivée d'internet avec sa palette de services, a convaincu les opérateurs que l'unité multimédia permettait également de naviguer sur la toile d'araignée mondiale.

L'interface utilisateur privilégié pour l'unité multimédia est bien entendu la télécommande. Elle sert à introduire les commandes de navigation et passer les ordres.

Une nouvelle application a vu le jour dans la possibilité d'effectuer des achats sur internet. Les unités multimédia possèdent des moyens pour encrypter des données confidentielles à destination des serveurs de télé-achats.

La méthode la plus répandue pour effectuer ses achats est la carte de crédit. Le numéro de la carte étant confidentiel, les données relatives à ce type de paiement sont encryptés afin de garantir la confidentialité des données de la carte selon le protocole SET ou SSL.

La nouvelle génération d'unité multimédia intègre donc un lecteur de carte à puce permettant d'identifier le porteur de ladite carte et d'effectuer les opérations cryptographiques nécessaires. Selon la procédure adoptée dans ce type de paiement, l'utilisateur doit, préalablement à l'utilisation des données contenues dans sa carte, introduire son code secret (PIN).

Cette introduction se fait par l'intermédiaire de la télécommande, que ce soit une télécommande simple disposant uniquement de touches numériques ou par une télécommande plus sophistiquée, avec un clavier alphanumérique et affichage.

La liaison entre la télécommande et l'unité multimédia est généralement de type infrarouge et caractérisée par une grande diffusion spatiale. Il est ainsi possible de commander son unité multimédia même si celui-ci n'est pas dans l'axe de la télécommande.

Un aspect important de cette invention est la constatation de ce point faible, c'est-à-dire que l'utilisateur va utiliser un moyen disposant d'un rayonnement important pour transférer son code personnel et secret de la télécommande vers l'unité multimédia.

Le but de la présente invention est de pouvoir garantir la sécurité des données personnelles depuis le serveur distant jusqu'à l'utilisateur final effectuant ses achats.

Ce but est atteint pour un système comprenant une télécommande et une unité multimédia disposant de moyens pour être connecté à un réseau de télécommunication, cette unité multimédia comprenant une unité centrale, une mémoire non volatile et une entrée de signaux de la télécommande, caractérisé en ce que la télécommande comprend des moyens pour encrypter les données à transmettre vers l'unité multimédia, ce dernier comprenant des moyens pour décrypter les donnés reçues.

De par ce système, les signaux transmis entre l'unité multimédia et la télécommande sont sécurisés et ne peuvent être interprétés par un tiers.

Les unités multimédia sont des appareils ne comportant pas de zone protégée et ne sont donc pas habilités à conserver des informations secrètes telle que par exemple une clé asymétrique privée. En effet, il ne faudrait pas que l'analyse en profondeur d'un telle unité multimédia donne à un tiers la possibilité de déchiffrer les informations transmises sous forme sécurisée. Pour éviter cela, il est nécessaire que la clé d'encryption soit propre au couple unité multimédia/télécommande.

Selon l'invention, la télécommande peut être de deux types, soit unidirectionnel ou bidirectionnel.

Dans le premier cas, le mode de transmission sécurisé est actionné par l'utilisateur par une commande spécifique sur la télécommande. La télécommande génère un nombre aléatoire et lit son numéro de série pour former une clé d'encryption symétrique CS. Ces informations sont chiffrées par l'intermédiaire d'une clé de chiffrement privée asymétrique (de type RSA par exemple) appelée clé de transaction CT. Une signature de transaction est ainsi construite. Le module de la clé de transaction a été chiffré avec une clé asymétrique privée, appelée clé de construction CC, et cette signature de construction privée est introduite dans la mémoire permanente et protégée de la télécommande en usine. L'unité multimédia de l'autre côté est en possession de la clé publique de construction afin de pouvoir décrypter les données envoyées par la télécommande et retrouver la clé d'encryption symétrique CS. Cette clé servira à encrypter les données transmises par la télécommande.

Les algorithmes d'encryption peuvent être asymétriques tel que décrit plus haut, ou symétrique. Il est également possible d'utiliser des clés ou des fonctions elliptiques.

A l'initialisation du mode sécurisé, les signatures de transaction et de construction sont envoyées à l'unité multimédia. Ce paquet est précédé d'un indicateur de mode sécurisé pour indiquer à l'unité multimédia que le traitement sera particulier.

A la réception, l'unité multimédia déchiffre la clé publique de transaction à partir de la signature de la clé de construction. L'unité multimédia déchiffre le nombre aléatoire et le numéro de série de la télécommande à partir de la signature de transaction. Il déduit alors la clé symétrique (de type DES par exemple) de session à partir du numéro de série et du nombre aléatoire.

La saisie du code secret de l'utilisateur peut alors débuter. Si l'affichage est fait sur le poste de télévision, la séquence suivante est effectuée, basée sur l'encryption symétrique DES:
- la première clé symétrique est utilisée pour encrypter la première touche envoyée par la télécommande,
- une nouvelle clé symétrique est recalculée à partir de l'ancienne clé symétrique et de la touche envoyée
- ce processus est répété jusqu'à la fin de l'introduction du code secret.

Selon une variante, la télécommande dispose d'un affichage et une fois que le code secret est saisi, il est envoyé à l'unité multimédia sous forme encrypté par la clé symétrique DES.

Dans le deuxième cas, c'est-à-dire avec une liaison bidirectionnelle entre la télécommande et l'unité multimédia, un dialogue peut s'instaurer entre ces deux entités.

L'unité multimédia envoie à la télécommande un message comportant la clé asymétrique publique de chiffrement. La télécommande initialise son mode de fonctionnement en mode sécurisé et génère une clé de session symétrique. La télécommande procède à la saisie du code secret de l'utilisateur, saisie validée par l'utilisateur. Si l'affichage se fait sur la télécommande, il sera par exemple affiché le nombre de caractères saisis.

La télécommande encrypte de code secret et construit un paquet qu'elle insère dans un bloc OAEP selon les normes SET.

La télécommande chiffre le bloc OAEP avec la clé asymétrique publique qu'elle a reçue de l'unité multimédia et retourne à l'unité multimédia ces informations encryptées.

Une fois le code transmis, la télécommande retourne en mode normal.

Divers algorithmes d'encryptage peuvent être utilisés tels que de type Simple-DES pour la construction de la clé de session et du bloc PIN, de type SHA-1 pour la construction du bloc OAEP ou de type RSA pour l'encryptage du bloc OAEP avec la clé publique fournie par l'unité multimédia.

L'invention sera mieux comprise grâce à la description détaillée qui va suivre en se référant aux dessins annexés dans lesquels :
- La figure 1 représente la configuration du système de l'invention dans le mode unidirectionnel,
- La figure 2 représente la configuration du système de l'invention dans le mode bidirectionnel,
- La figure 3 représente la configuration du système de l'invention dans le mode bidirectionnel avec lecteur de carte dans la télécommande.

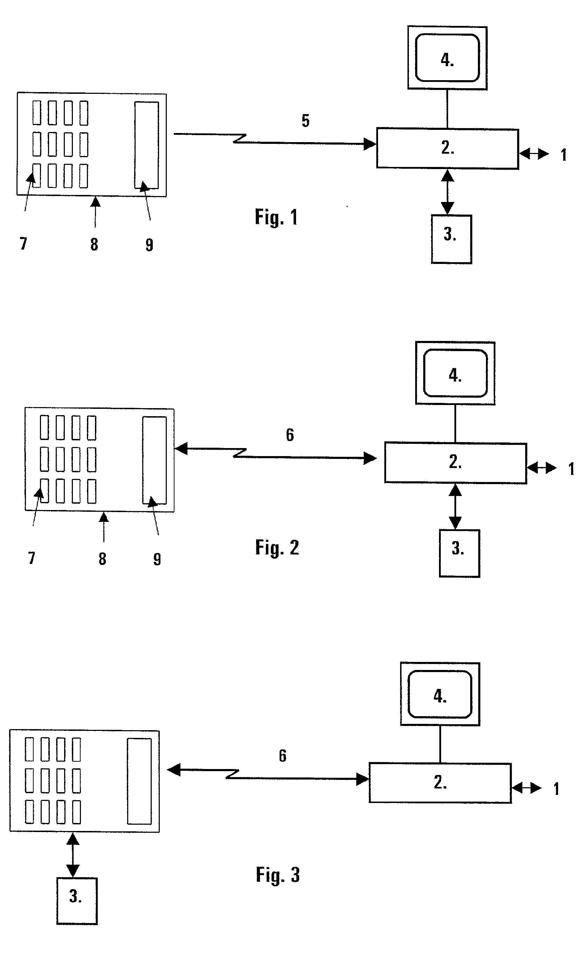

Sur la figure 1, est illustré l'ensemble télécommande et unité multimédia. L'unité multimédia comprend une partie centrale 2 reliée au monde extérieur par une entrée/sortie 1. A cette unité multimédia est connecté un écran de visualisation 4 ainsi que la carte de paiement de l'utilisateur 3.

La télécommande 8 dispose d'un clavier 7 et d'un affichage 9. Les données sont transmises par la voie infrarouge, la plus courante pour ce type de télécommande.

La carte de paiement 3 est introduite dans l'unité multimédia 2 dans un logement à cet effet. L'unité multimédia peut ainsi lire la carte 3 pour les besoins d'identification de l'utilisateur.

La télécommande 8 permet de saisir le numéro de code secret et, selon les variantes, de l'afficher sur l'affichage 9. En effet, il est d'usage que le code secret ne soit pas affiché en clair mais que seul un retour sous forme d'une étoile apparaisse sur l'affichage. Néanmoins, dans ce type d'utilisation dans un milieu protégé, il est possible de déroger à ce principe et d'indiquer à l'utilisateur, quelle touche il a activé.

Dans la figure 2, la télécommande dispose d'une liaison bidirectionnelle permettant l'établissement d'un dialogue pour la définition des clés. Ce mode est celui de l'avenir non seulement dans ce type d'utilisation mais également pour les jeux interactifs. L'utilisation de ce mode permet à l'unité multimédia de générer une nouvelle clé RSA à chaque entrée du code secret. Il n'y a donc pas de risque de compromettre globalement la sécurité des télécommandes, puisque même si une clé deviendrait connue, elle ne donnerait l'accès qu'à un code secret spécifique.

Selon la variante de la figure 3, la télécommande est transformée en un véritable terminal de transaction. Toute la partie sécurité est intégrée dans cette télécommande et le dialogue entre télécommande et unité multimédia est encrypté selon les procédures décrites ci-dessus. Les données échangées sous forme infrarouge sont sécurisées.

Le champ d'application d'une telle télécommande ne se limite pas à la télévision à péage. Elle peut être utilisée pour une loterie en ligne par téléchargement sécurisé des numéros valides dans votre télécommande. De la même manière, les numéros introduits par l'utilisateur, sont signés par la clé privée contenue dans la télécommande et identifiant d'une manière certaine l'utilisateur.

Cette télécommande sert également à introduire les mots de passe pour les différents services payants proposés aux utilisateurs.

La sécurisation des données transmises telles que décrites plus haut pour une télécommande infrarouge peut être étendue à d'autres types de support tels que:
- les données transmises par infrarouge entre un téléphone mobile et un ordinateur,
- les périphériques utilisant des ondes électromagnétiques pour transmettre des données aux ordinateurs basés sur des normes telles que Blue Tooth.

La méthode d'établissement des clés de transaction et de construction répond aux exigences de sécurité dans une transaction unidirectionnelle. Néanmoins des méthodes de génération simplifiée peuvent également être appliquée.

Il est ainsi possible de demander à l'utilisateur de programmer une clé dans la télécommande et dans son unité multimédia. Si les deux clés sont identiques, le système fonctionnera à satisfaction. Dans le cas contraire, l'unité multimédia informera l'utilisateur de l'impossibilité de décrypter le message envoyé par la télécommande.

Pour ne pas imposer une double introduction, la télécommande, dans un mode d'initialisation, transmet à l'unité multimédia la clé d'encryption. Selon un mode de réalisation, le niveau d'émission infrarouge est abaissé pour que cette clé ne puisse être interceptée par un tiers.

Une autre variante de génération de clés consiste à générer une clé symétrique CS dans la télécommande et l'encrypter par la clé privée de construction CC; elle ensuite décryptée par l'unité multimédia par sa clé publique et utilisée pour les prochaines transmissions.

Cette clé symétrique CS peut être remplacée par une nouvelle clé symétrique CS' basée sur un nombre aléatoire généré par la télécommande et transmis sous forme encrypté par la clé CS à l'unité multimédia.

En lieu et place de la génération d'une clé symétrique CS, il est possible de remplacer clé symétrique par une clé privée asymétrique CT. La transmission se fait alors avantageusement en mode à diffusion spatiale réduite. Une fois la signature contenant la clé CT décryptée par la clé publique CC de l'unité multimédia, c'est la clé cette clé publique CT qui permettra de décrypter les données transmises de la télécommande.

Selon une autre forme de réalisation de l'initialisation, la télécommande comprend une clé publique et une clé privée unique à la télécommande. Lors de la première installation, la clé publique est transférée de la télécommande vers l'unité multimédia. La clé privée est conservée dans le processeur cryptographique de la télécommande.

## Revendications

1. Système comprenant au moins une télécommande et une unité multimédia disposant de moyens pour être connecté à un réseau de télécommunication, ladite unité multimédia comprenant une unité centrale, une mémoire non volatile et une entrée de signaux de la télécommande, **caractérisé en ce que** la télécommande comprend des moyens pour encrypter les données à transmettre vers l'unité multimédia, ce dernier comprenant des moyens pour décrypter les donnés reçues.

2. Système selon la revendication 1, **caractérisé en ce que** la liaison entre la télécommande et l'unité multimédia est de type infrarouge.

3. Système selon les revendications 1 ou 2, **caractérisé en ce que** les moyens d'encryption de la télécommande sont basés sur la clé privée et que les moyens de décryption sont basés sur une clé publique.

4. Système selon les revendications 1 à 3, **caractérisé en ce que** la télécommande comprend un abaisseur d'intensité d'émission activé lors de la transmission de la clé publique vers l'unité multimédia.

5. Système selon les revendications 1 à 4, **caractérisé en ce que** la télécommande comprend un générateur de nombre aléatoire et au moins un numéro unique.

6. Système selon l'une des revendications précédentes, **caractérisé en ce que** la télécommande comprend un interface de liaison bidirectionnel avec l'unité multimédia.

7. Système selon la revendication précédente, **caractérisé en ce que** la télécommande comprend un lecteur de carte à puce.

8. Méthode de transmission sécurisé entre une télécommande et une unité multimédia connectée à un réseau de télécommunication, **caractérisée en ce que** les données envoyées par la télécommande à l'unité multimédia sont encryptées par une clé de transport, l'unité multimédia décryptant ces données avec la clé de transport correspondante.

9. Méthode selon la revendication 8, **caractérisée en ce que** la clé de transport est de type asymétrique, la clé privée étant utilisée dans la télécommande et la clé publique dans l'unité multimédia.

10. Méthode selon la revendication 9, **caractérisée en ce que** la télécommande contient initialement la clé privée et la clé publique, cette dernière étant envoyée par la télécommande dans une phase d'initialisation.

11. Méthode selon la revendication 8, **caractérisée en ce qu'**elle consiste à :
- générer par la télécommande un nombre aléatoire et lire son numéro unique pour former une clé d'encryption symétrique CS,
- encrypter ces informations par l'intermédiaire d'une première clé CT de chiffrement privée asymétrique et composer une signature de transaction,
- émettre la signature de transaction avec une signature de construction contenue dans la mémoire de la télécommande et comprenant la première clé CT publique encryptée par une seconde clé CC privée chargée durant l'initialisation de la télécommande,
- décrypter dans l'unité multimédia, par la seconde clé publique CC, la signature de construction et en extraire la première clé CT publique,
- décrypter la signature de transaction par l'intermédiaire de la première clé CT publique pour obtenir la clé d'encryption symétrique CS,
- décrypter les données transmises de la télécommande par la clé d'encryption symétrique CS.
